# EUROPEAN PATENT APPLICATION

(11) **EP 3 326 569 A1**
(43) Date of publication of application: **30.05.2018**
(21) Application number: 15899012.7
(22) Date of filing: 18.11.2015
(51) Int. Cl.: A61C 7/02, A61C 7/12

(54) **KIT FOR MANUFACTURING CUSTOMIZED ORTHODONTIC ARCH WIRE AND METHOD FOR MANUFACTURING ORTHODONTIC ARCH WIRE USING SAME**

(30) Priority: 17.07.2015 KR 20150101611
(71) Applicant: Lee, Jong Ho, Pohang-si, Gyeongsangbuk-do 790-828 (KR)
(72) Inventor: Lee, Jong Ho, Pohang-si, Gyeongsangbuk-do 790-828 (KR)
(74) Representative: dompatent von Kreisler Selting Werner - Partnerschaft von Patent- und Rechtsanwälten mbB
(86) International application number: PCT/KR2015/012399
(87) International publication number: WO 2017/014365

(57) **Abstract**

A customized orthodontic archwire fabrication kit and a method of fabricating an orthodontic archwire using the same are disclosed. The orthodontic archwire fabrication kit according to the present disclosure comprises: a jig base formed by perforating the pairs of inner fastening holes and outer fastening holes corresponding to the positions of teeth on a dental setup model of a patient; a jig comprising at one end a first head through which a first through hole is penetrated, at the other end a second head through which a second through hole is penetrated, and a body connecting the first head and the second head and having a wire ligation slot recessed on a portion of the top of the body; a fixing screw corresponding to the dimensions of the first through hole and inner fastening hole; and a fixture corresponding to the dimensions of the second through hole and outer fastening hole.

By applying heat in a furnace after the nitinol wire is ligated to and fixed in the jig's wire ligation slot, a custom orthodontic archwire will be created.

## Description

### FIELD OF THE INVENTION

The present disclosure relates to a custom orthodontic archwire and method of making same, and more particularly, to a method for fabricating the custom orthodontic archwire from a wire of nitinol material which requires baking at a high temperature.

### DESCRIPTION OF THE RELATED ART

Orthodontia narrowly refers to a treatment for the correction of irregularly aligned teeth, and broadly to a treatment that corrects various skeletal incompatibilities in the teeth and mouth that may occur during the growth process, in order to have the teeth perform their normal functions.

In the conventional practice of orthodontia, the treatment is performed by attaching brackets to teeth and ligating an orthodontic archwire so that the position, tilting or direction of the teeth is aligned by the restoring force of an archwire.

In recent years, customized orthodontic techniques have been introduced wherein a set-up model is made for a patient's ideal tooth condition and then a bracket position and a wire shape are designed using a computer software.

3M INNOVATIVE PROPERTIES COMPANY, H32, and Guangzhou Riton Biomaterial are known to have patents on customized orthodontic technologies.

For example, a technique of acquiring the shape of a archwire corresponding to a patient's tooth position and fabricating a customized archwire for lingual orthodontics composed of one or more segments was introduced in 3M Innovative Properties Company's patent, ORTHODONTIC ARCHWIRES WITH REDUCEDINTERFERENCE AND RELATED METHODS(EP2736444).

Meanwhile, a titanium alloy or stainless steel wire is often used as an orthodontic archwire.

Among the titanium alloys, nitinol, an alloy of nickel and titanium, is a typical shape memory alloy widely used for orthodontia because of its superior resilience.

Nitinol alloy, when heated to a temperature of 500 ° C or higher, will change its atomic arrangement in its crystals and its original shape will be fixed, thereby showing its restoring force to return to its original fixed shape.

In the above-mentioned EP2736444 patent, a wire is fabricated into a desired shape by bending the wire using a separate bending device. However, as the nitinol alloy wire has a property of remembering its first shape, it still has a limit in that an archwire having a desired shape cannot be obtained by bending the archwire at a desired angle merely using a bending device.

In a patent SYSTEM FOR CNC-MACHINING FIXTURES TO SET ORTHODONTIC ARCHWIRES (US 2008/0254403) a technique was introduced in which the shape of a nitinol wire is obtained by using computer software, a fixture to hold a wire is cut using a CNC machine, and the wire fastened to the fixture is heated.

Although this technique suggests a method for making a customized archwire of nitinol material, there is still an issue that its fabrication cost is greatly increased because a fixture is to be individually fabricated by a CNC machine for each patient, and that the quality of a final product will be deteriorated if a wire is not fully legated to a fixture, causing detachment from the fixture during the heat application to the wire.

### PRIOR ART LITERATURE

### PATENT LITERATURE

(Patent document0001) 1. US2008/0254403 "SYSTEM FOR CNC-MACHINING FIXTURES TO SET ORTHODONTIC ARCHWIRES"
(Patent document 0002) 2. EP2724685 "Personalized Orthodontic Appliance Having Orthoaxis Function"
(Patent document 0003) 3. EP2724685 "Method for Manufacturing Positioning Tray and Bracket with Positioning Hook for Manufacturing Positioning Tray"
(Patent document 0004) 4. EP2571449 "Customised jig for an orthodontic appliance, an assembly formed by said jig, a base and a bracket, and methods for designing one such jig"
(Patent document0005) 5. EP2736444 "ORTHODONTIC ARCHWIRES WITH REDUCED INTERFERENCE AND RELATED METHODS"

### BRIEF DESCRIPTION

### OBJECTS OF DISCLOSURE

The object of the present disclosure is to solve the problems of the related art as described above, provide a kit for fabricating a customized orthodontic archwire of nitinol material and a method of fabricating a customized orthodontic archwire using the same.

In particular, it is directed to providing a method of fabricating an economical, customized orthodontic archwire by securing the most usable parts for general purposes.

### TECHNICAL SOLUTION

method of making an orthodontic archwire using a customized tooth orthodontic archwire fabrication kit in the present disclosure to achieve said objects comprises:
a stage wherein the location of the pair of an inner fastening hole and an outer fastening hole of the jig base is determined from a patient's tooth structure data;
a stage wherein the pair of an inner fastening hole and an outer fastening hole is perforated at determined positions on the jig base;
a stage wherein a first through hole is aligned in said inner fastening holes, a wire is ligated to a wire ligation slot, and a fixing screw is inserted into the inner fastening hole through the first through hole and a stage wherein the screw head of a fixing screw covers the top of a wire;
a stage wherein a fixture will be inserted into the outer fastening hole through the second through hole in order for a second through hole to be aligned with an outer fastening hole, after a location is adjusted using said fixing screw as a rotation axis; and,
a stage wherein said jig base is put into a heating furnace and heated; and,
a wire is removed from the jig base.

The stage of determining the location of the pair of an inner fastening hole and an outer fastening hole of the jig base 10, comprising:
a step of preparing a dental setup model;
a step of determining the location of bracket attachment from the dental setup model;
a step of determining the location for wire bending and a bending angle from an imaginary line passing through the slots of brackets; and,
a step wherein the location of the jig is determined according to a determined place and angle for wire bending, and the locations of an inner fastening hole and an outer fastening hole corresponding to the first through hole 211 and second through hole 221 of said jig are determined.

In the stage wherein the pair of an inner fastening hole and an outer fastening hole is perforated at determined positions on the jig base, the number of the pairs of inner fastening holes and outer fastening holes to be perforated is equivalent to the number of maxillary or mandibular teeth of a patient.

In the stage wherein a second through hole is aligned with an outer fastening hole, the second head of each jig is sequentially moved to adjust its position while the first head of each jig is fixed to its corresponding inner fastening hole, so that the second through hole can be aligned with the outer fastening hole.

A customized orthodontic fabrication kit□ in the present disclosure to achieve said objects is provided with a jig base formed by perforating the pairs of inner fastening holes and outer fastening holes corresponding to the positions of teeth on a set-up model of a patient and others comprising:
a jig comprising at one end a first head through which a first through hole is penetrated, at the other end a second head through which a second through hole is penetrated, and a body connecting the first head and the second head and having a wire ligation slot recessed on a portion of the top of the body;
a fixing screw corresponding to the dimensions of the first through hole and the inner fastening hole; and,
a fixture corresponding to the dimensions of the second through hole and the outer fastening hole.

Said fixing screw has a screw head with a radius longer than a distance between the wire ligation slot and the edge of the first through hole.
nner fastening holes 11 are located on the lingual side of the dental setup model of a patient and outer fastening holes are located in the buccal side, respectively.
he volume of the second head of said jig is bigger than that of the first head.

### EFFECTS OF THE INVENTION

According to the present disclosure, it is possible to fabricate a customized orthodontic archwire without using expensive CNC equipment, thereby greatly increasing and improving the economic efficiency of orthodontia.

Not only improved is the workability in the process of fixing the nitinol wire to the jig and fine-tuning its position, but the precision and quality of a final archwire is also greatly improved because a wire is fixed, not departed, for a precise shape in the heating process.

### BRIEF DESCRIPTION OF THE DRAWINGS

FIG. 1 is a view illustrating a wire legated to a custom orthodontic archwire fabrication kit according to the present disclosure.
FIG. 2 is a view illustrating the engagement of a jig, a fixing screw, and a fixture.
FIG.3 is a view illustrating the structure of a jig base.
FIG.4 is a view explaining a process of fixing a jig to a jig base and ligating a wire.
FIG.5 is a view explaining a process of putting a jig into a heating furnace and baking and removing the wire.
FIG. 6 is a flow chart explaining a method of fabricating an orthodontic archwire in time series according to the present disclosure.
FIG. 7 is a flowchart giving a further supporting explanation of the process of determining the position of the fastening holes of the base.

### DETAILED DESCRIPTION OF THE INVENTION

Hereinafter, the present invention will be described in detail with reference to preferred embodiments of accompanying drawings, wherein a reference numeral refers to the same element throughout the following description.

Throughout the detailed description or claims, unless explicitly described to the contrary, the word "include" and variations such as "includes" or "including" will be understood to the inclusion of stated elements but not the exclusion of any other elements.

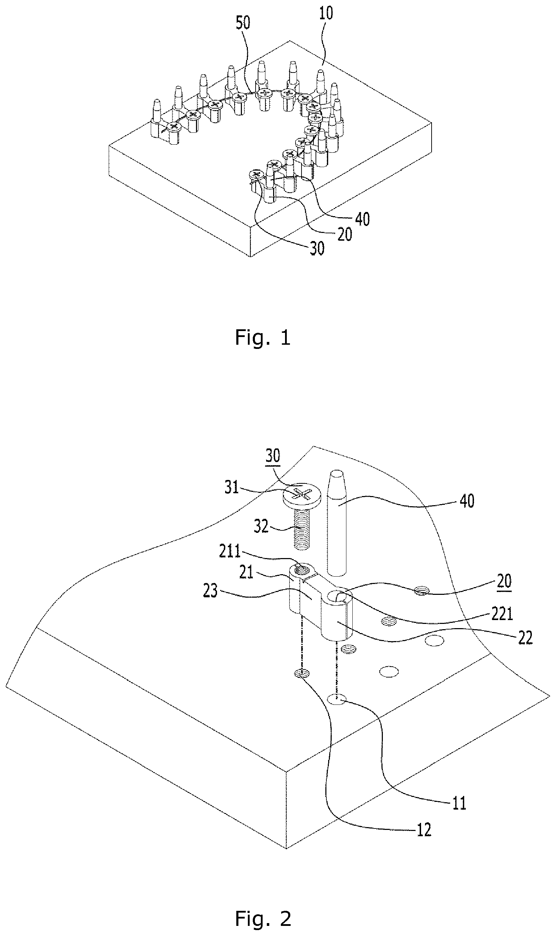

Hereinafter, referring to FIG. 1 to FIG. 3, a configuration of a customized orthodontic archwire fabrication kit according to an embodiment of the present disclosure will be described

The present disclosure relates to a fabrication kit for producing a customized wire conforming to a tooth setup model, and more desirably to production equipment for making into a desired shape a shape memory alloy wire having a specific shape by baking at a high temperature.

In particular, the present disclosure can be used in the fabrication of a customized orthodontic archwire through the baking of angular-shape nitinol wire.

FIG. 1 is a view illustrating a wire legated to a custom orthodontic archwire fabrication kit according to the present disclosure.

The customized orthodontic archwire fabrication kit according to the present disclosure shown in FIG. 1 has a jig base 10 and a plurality of jigs 20.

The number of the jigs 20 is equivalent to the number of teeth on a dental setup model, whose position is determined according to the positions of brackets on the dental setup model.

In FIG.1, a plurality of jigs 20 are fixed on a jig base 10, and a wire is inserted and fixed in a wire ligation slot 231 formed in the jig 20.

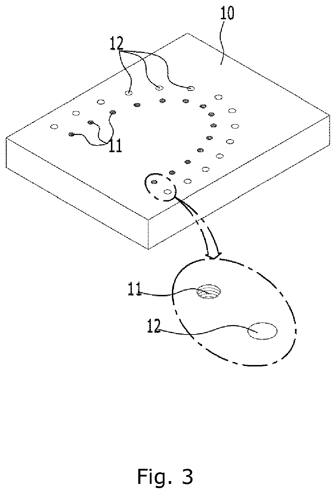

FIG. 2 illustrates the engagement of a jig 20, a fixing screw30, and a fixture, and FIG. 3 illustrates the structure of a jig base10.

The jig base 10 is formed by perforating a plurality of inner fastening holes 11 and outer fastening holes 12 on the upper surface thereof. The holes do not necessarily pass through the jig base 10 and the holes can be perforated up to a depth sufficient to fix the jig 20.

As each jig 20 corresponds to a pair of inner and outer fastening holes 11 and 12, the inner fastening hole 11 and the outer fastening hole 12 are preferably provided in pair.

Each of the pairs of an inner fastening hole 11 and an outer fastening hole 12 corresponds to each of teeth' positions on the dental set-up model, respectively.

More specifically, the movement path of a wire is determined according to the position of a bracket on the dental set-up model, and the position of each jig 20 is determined for a wire ligation slot 231formed on a plurality of jigs 20 to be on a movement path. The positions of an inner fastening hole 11 and an outer fastening hole 12 are located according to the position of a jig 20.

More specifically, the inner fastening holes 11 are located on the lingual side of a dental setup model, and the outer fasteners 12 are located on the buccal side.

As illustrated in the embodiment of Fig. 3, the inner fastening holes 11 are arranged on the lingual side of teeth, and the outer fastening holes 12 are arranged on the buccal side of teeth.

The jig 20 has a structure in which a first head 21 and a second head 22on the both ends of a body 23 are opposite to each other.

A first head 21 is located at one end of the body 23, and a first through hole 211 vertically penetrated at the center.

A second head 22 is located at the other end of the body 23 and a second through hole 221 is vertically penetrated at the center.

In a preferable embodiment, the first through hole 211 and the second through hole 221 are provided in a direction perpendicular to the upper surface of the jig base 10.

In a preferable embodiment, the body 23 may have a cross-sectional shape that is thinner and longer than the first head 21 or the second head 22.

A wire ligation slot 231 is recessed in a portion on the upper end of the body 23.

In a preferable embodiment, the cross section of the wire ligation slot 231 has the same as that of the wire. For example, a recess in the shape of a rectangular parallelepiped having a length and width of 0.18 inches may be formed in a portion on the upper end of the body 23.

By doing so, a wire can be tightly ligated to each wire ligation slot 231.

In a preferable embodiment, a wire ligation slot 231 may be formed closer to a first head 21. This is to cover and fix a wire with the screw head 31 of a fixing screw 30 as described later.

A customized orthodontic archwire fabrication kit according to the present disclosure is provided with a fixing screw 30 corresponding to the dimensions of a first through hole 211 and an inner fastening hole 11.

The first through hole 211 may or may not have threads formed therein, and may have a width to which the fixing screw 30 can be inserted. The inner fastening hole 11 is formed with internal threads, which is engaged with threads formed upon the exterior of a fastening screw 30 to be tightened.

The radius of the screw head 31 of a fixing screw 30 has a dimension longer than the distance between a wire ligation slot 231 and the edge of a first through hole 211.

That is, when the fixing screw 30 is inserted into the first through hole 211, the screw head 31 of the fixing screw 30 will cover at least part of the upper surface of the wire ligation slot 231. When a wire is inserted into the wire ligation slot 231 and then the fixing screw 30 is fastened to an inner fastening hole 11 on the jig base 10, the wire is fixed so as to prevent the wire from being detached.

In a preferable embodiment, a fixture 40 has a rod shape and has a diameter corresponding to the dimensions of a second through hole 221 and an outer fastening hole 12. Threads are not formed in the fixture 40, and is inserted into the second through hole 221 and the outer fastening hole 12 at the same time to fix a jig 20.

The fixture 40 may have the same length and diameter as the fixing screw 30, but in a preferable embodiment, it may have a slightly larger size so that it can be easily gripped for insertion by an operator.

As shown in FIG. 2, the fixture 40 may be longer and thicker in length and diameter than a fixing screw 30.

As described above, as inner fastening holes 11 are arranged in the lingual side and outer fastening holes 12 are arranged in the buccal side, the intervals between inner fastening holes 11 are somewhat narrower, but the intervals between outer fastening holes (12) are larger than those of the inner fastening holes.

Therefore, the volume of a second head 22 can be designed to be larger than that of a first head 21 for easy operation.

As illustrated in FIG. 2, the second head 22 can be designed to be somewhat larger in volume than the first head 21. This is because the space on the lingual side where the first heads 21 are arranged is less spacious than that on the buccal side where the second heads 22 are arranged and because the operability in manually adjusting the location of jig 20 can be greatly improved.

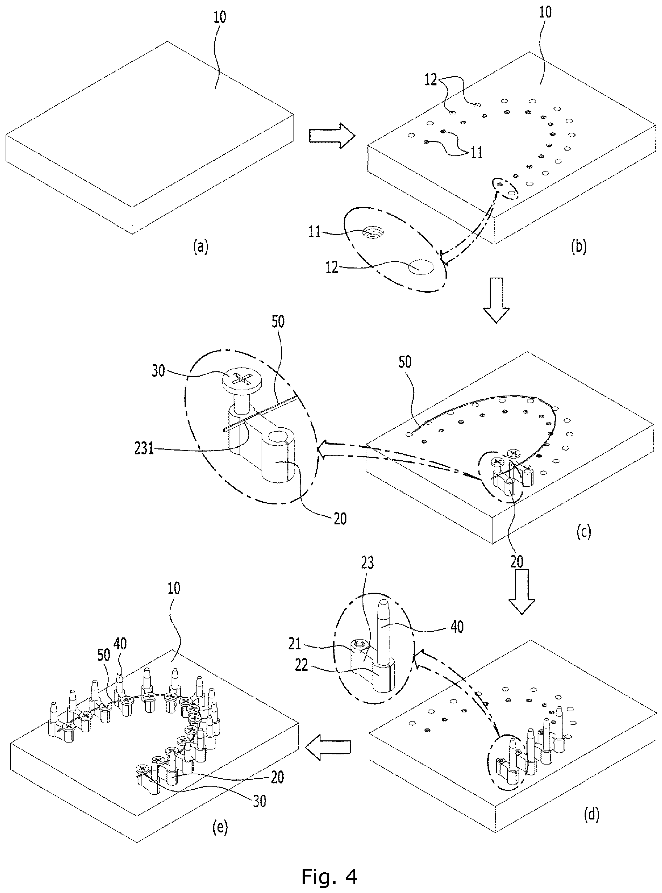

Hereinafter, referring to FIG. 4 to FIG. 7, a method of fabricating a dental archwire according to an embodiment of the present disclosure will be described.

The method of fabricating an orthodontic archwire according to the present disclosure can be implemented by using the custom orthodontic archwire fabrication kit as described above.

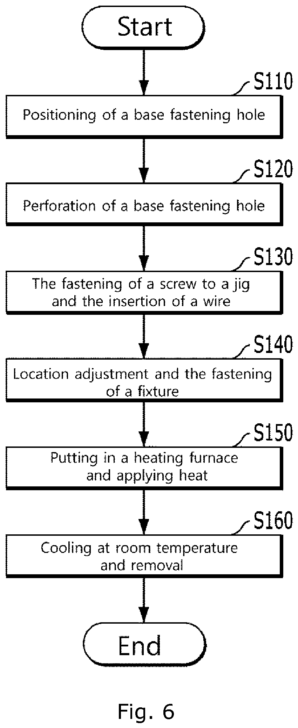

FIG. 6 is a flow chart explaining in time series a method of fabricating an orthodontic archwire according to the present disclosure.

As shown in FIG. 6, first, the location of a pair of an inner fastening hole 11 and an outer fastening hole 12 on a jig base 10 is determined from the data of teeth structure.(the step S110)

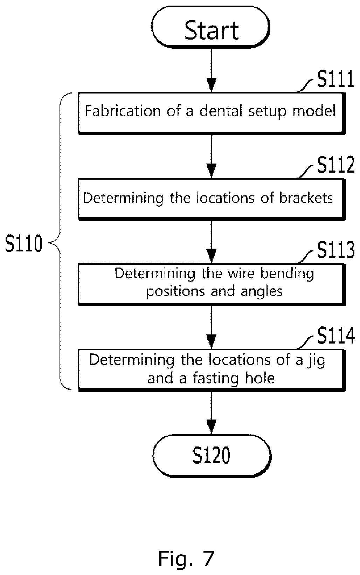

FIG. 7 is a flowchart giving a further supporting explanation of the process of determining the location of fastening holes the base. Referring to FIG. 7, the step S110 will be performed through the following detailed process.

First, the dental setup model of a patient is prepared. (S111)

Dental setup models are typically made in the conventional practice of orthodontia, and can be created by cutting teeth from the
model of mandibular and maxillary dental arches with malocclusion and rearranging them to their ideal position.

Then, locations for bracket attachment are determined from a patient's dental setup model. (S112)

In recent years, the mounting positions of brackets have been set on a computer program by reading a dental setup model into 3D data. A fixing process for determining locations for bracket attachment can also be used using prior-art techniques.

Once the mounting positions of brackets are determined, the bending points and angles of a wire will be determined from a line passing through bracket slots. (S113)

Using a computer program, the coordinates of the line connecting the bracket slots can be obtained and the bending angles and points of the wire will be determined in consideration of a patient's oral condition.

A computer program, the present process, or a prior art can be used to set the bending angles and points of the wire.

However, according to a prior art a pre-fabricated wire is directly bent using a device when the bending points and angles of the wire are determined, while according to the present disclosure the bending points are determined using a separate production kit.

When the bending points and angles of the wire are determined, the locations of jigs 20 can be determined thereby.

The wire ligated in the wire ligation slots 231 of the jigs 20 must be bent according to the determined bending locations and angles. As the wire ligation slots 231 of the jigs 20 must be placed in each exact coordinate of bracket slots or the line connecting each wire ligation slot 231 of the jigs 20 must be overlapped with that connecting each bracket slot, the locations of the jigs 20 can be determined thereafter.

Once the locations of jigs 20 are determined, the locations corresponding to the first through holes 211 and second through holes 221 of the jigs 20 can be determined as the locations of inner fastening holes 11 and the outer fastening holes 12. (S114)

When the locations of the pairs of inner fastening holes 11 and outer fastening holes 12 are respectively determined, each pair of the inner fastening holes 11 and the outer fastening holes 12 will be perforated at a determined position on the jig base 10. (S120)

Fig.4 (a) in shows the shape of a jig base 10 before an inner fastening hole 11 and an outer fastening hole 12 are perforated. Fig. 4 (b) shows the shape of a jig base after an inner fastening hole 11 and an outer fastening hole 12 are perforated.

Fig. 4 (b) shows that a total of 14 pairs of inner fastening holes 11 and outer fastening holes 12
pairs in correspondence with anterior teeth and posterior teeth are formed, respectively.

That is, when the pairs of inner fastening holes 11 and outer fastening holes 12 are prepared as described above, first through holes 211 of the jig 20 are aligned along the inner fastening holes 11.

After a wire is ligated to a wire ligation slot 231, a fixing screw 30 will be passed through the first through hole 211 and have an inner fastening hole 11engage with it.

As a result, the screw head 31 of a fixing screw 30 covers the top of a wire and have the wire fixed.

Fig. 4 (c) shows the above-mentioned procedure.

This procedure will be repeated for all inner fastening holes 11.

After the completion of the procedure, the first head 21 of the jig 20 is fixed by the screw head 31 to each of the inner fastening holes 11 of the jig base 10, the wire is ligated to the wire 231.

Fig. 4 (d) shows a completed image up to now.

Then while a second head 22 is held by the hand, second through holes 221 are sequentially aligned with outer fastening holes 12. That is, the location of a second head 22is adjusted, with a fixing screw 30 as a rotation axis.

Thereafter, a fixture 40 is inserted into the outer fastening hole 12 through the second through hole 221. (S140)

After this procedure is repeated for each jig, each jig 20 will be fixed to the jig base 10 in its respective position, and the wire will be naturally fixed in a bent state according to the angle and position of the wire ligation slot 231, as shown in FIG. 4 (e),

After that, the jig base 10 is put into a heating furnace and heated (S150).

In the preferred embodiment, the jig base 10 is heated at about 500°C for a predetermined time, thereby making a wire of nitinol material memorizing its bent shape formed by the jig 20.

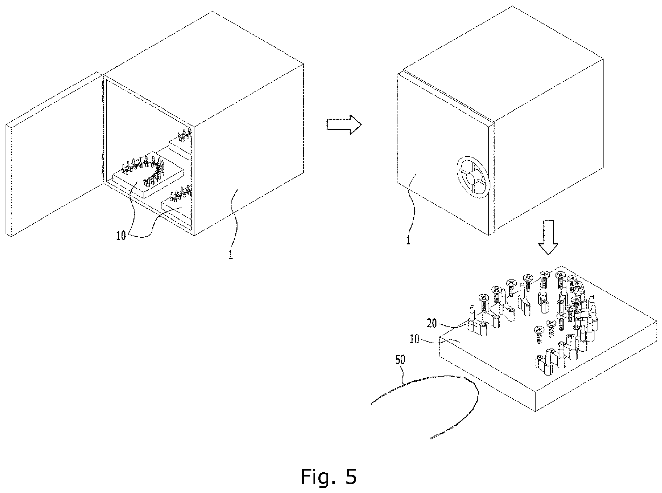

Fig. 5(a) and 5(b) illustrates how jig bases 10 is put into a heating furnace and heated.

After removing a jig base 10 from the heating furnace, cool it at room temperature, and remove the wire from the jig base (S160).

As illustrated in Fig. 5(c), the fabrication of a custom orthodontic archwire is completed after all fixing screws 30 are loosened and the wire is removed.

From the embodiments given above, the technical idea of the present disclosure has been described.

It is self-evident that a modified embodiment can be readily implemented by those skilled in the art that this disclosure belongs to. Also, although not explicitly shown or described, various modifications, including the modification of the technical idea of the present disclosure, from the description of the present disclosure can be made by those skilled in the art. However, those modifications are still within the scope of the present invention. It is to be understood that the disclosure is not limited to the disclosed embodiments described with reference to the accompanying figures, but, on the contrary, is intended to cover various modifications and equivalent arrangements included within the spirit of the scope of the appended claims.

### INDUSTRIAL APPLICABILITY

The present disclosure can be applied to the field of orthodontics.

### DESCRIPTION OF TERMINOLOGY

1: a heating furnace
10: a jig base
11: an inner fastening hole
12: an outer fastening hole
20: a jig
21: a first head
211: a first through hole
22: a second head
221: a second through hole
23: a body
231: a wire ligation slot
30: a fixing screw
31: a screw head
32: a screw shank
40: a fixture

## Claims

1. A method of fabricating an orthodontic archwire through stages, comprising:
a stage wherein the location of the pair of an inner fastening hole 11 and an outer fastening hole 12 of the jig base 10 is determined from a patient's tooth structure data;
a stage wherein the pair of an inner fastening hole 11 and an outer fastening hole 12 is perforated at determined positions on the jig base 10;
a stage wherein a first through hole 211 is aligned with said inner fastening hole 11, a wire is ligated to a wire ligation slot 231, and a fixing screw 30 is inserted into said inner fastening hole 11 through the first through hole 211;
a stage wherein a fixture 40 will be inserted into said outer fastening hole 12 through the second through hole 221 in order for a second through hole 221 to be aligned with an outer fastening hole 12, after a location is adjusted using said fixing screw 30 as a rotation axis; and,
a stage wherein said jig base 10 is put into a heating furnace and heated and a wire is removed from the jig base.

2. The stage of determining the location of the pair of an inner fastening hole 11 and an outer fastening hole 12 of the jig base 10 according to claim 1 in a method of fabricating an orthodontic archwire, comprising:
a step of preparing a dental setup model;
a step of determining the location of bracket attachment from the dental setup model;
a step of determining the location for wire bending and a bending angle from an imaginary line passing through the slots of brackets; and,
a step wherein the location of the jig 20 is determined according to a determined place and angle for wire bending, and the locations of an inner fastening hole (11) and an outer fastening hole 12 corresponding to the first through hole 211 and the second through hole 221 of the jig 20 are determined.

3. In the stage wherein the pair of an inner fastening hole 11 and an outer fastening hole 12 is perforated at determined positions on the jig base 10 according to claim 1 in a method of fabricating an orthodontic archwire, the number of the pairs of inner fastening holes 11 and outer fastening holes 12 to be perforated is equivalent to the number of maxillary or mandibular teeth of a patient, and in the stage wherein the second through hole 221 is aligned with an outer fastening hole 12, the second head 22 of each jig 20 is sequentially moved to adjust its position while the first heads 21 of each jig 20 is fixed to its corresponding inner fastening holes 11, so that the second through holes 221 are aligned with the outer fastening holes 12.

4. A customized orthodontic fabrication kit, comprising:
a jig base 10 formed by piercing the pairs of inner fastening holes 11 and outer fastening holes 12 corresponding to the positions of teeth on a set-up model of a patient;
a jig 20 comprising at one end a first head 21 through which a first through hole 211 is penetrated, at the other end a second head 22 through which a second through hole 221 is penetrated, and a body 23 connecting the first head 21and the second head 22 and having a wire ligation slot 231 recessed on a portion of the top of the body;
a fixing screw 30 corresponding to the dimensions of the first through hole 211 and the inner fastening hole 11; and,
a fixture 40 corresponding to the dimensions of the second through hole 221 and the outer fastening hole 12.

5. A customized orthodontic fabrication kit according to claim 4, comprising:
a fixing screw 30 that has a screw head 31 with a radius longer than a distance between the wire ligation slot 231 and the edge of the first through hole 211.

6. A customized orthodontic fabrication kit according to claim 4 wherein inner fastening holes 11 are located on the lingual side of the dental setup model of a patient and outer fastening holes 12 are located in the buccal side, respectively, and the volume of the first head 21 of said jig 20 is smaller than that of second head 22.

7. A customized orthodontic fabrication kit according to claim 4 wherein said wire ligation slot (231) is formed recessed within the radius of the screw head 31 of a fixing screw 30.

8. A customized orthodontic fabrication kit according to claim 4 wherein said wire ligation slot 231 has a cross-section with the same dimension as a wire.

9. A customized orthodontic fabrication kit according to claim 4 wherein said fixing screw 30 has a screw shank having threads in the lower part of screw head 31 and said fixture 40 has a rod shape without threads.
